Europäisches Patentamt

(19) **European Patent Office**

**Office européen des brevets**

(11) Publication number: **0 094 240**
**A2**

(12) # EUROPEAN PATENT APPLICATION

(21) Application number: **83302615.6**

(22) Date of filing: **10.05.83**

(51) Int. Cl.³: **G 11 B 17/10**

(30) Priority: **11.05.82 US 377196**

(43) Date of publication of application: **16.11.83**
**Bulletin 83/46**

(84) Designated Contracting States: **AT BE CH DE FR GB IT LI LU NL SE**

(71) Applicant: **Media Systems Technology Inc., 17991 Fitch Avenue, Irvine California 92714 (US)**

(72) Inventor: **Norton, James A., 2514 E. Coolidge, Orange California 92667 (US)**

(74) Representative: **Rushton, Ronald et al, SOMMERVILLE & RUSHTON 11 Holywell Hill, St. Albans Hertfordshire AL1 3EZ (GB)**

(54) **Automatic floppy disc drive loader.**

(57) An automatic floppy disk loader allows a stack of floppy computer disks to be fed into a disk drive, one at a time, and fed out of the drive into selector bins. The loader has an improved, self-aligning construction so that the mechanisms used to transport and control the motion of the floppy disk are placed in correct alignment during manufacturing without requiring manual, individualized adjustment. The disk drive is surrounded by a unitary, partially enclosed frame construction which also serves to support rollers, and disk sensors so that precise alignment is achieved. The alignment improvements also ensure that misalignment does not gradually occur as the loader is used. The loader also includes an improved picker mechanism for feeding floppy disks into a disk drive, where the picker follows a slot in a plate in order to properly align the feeding of the disks and includes a hinged, spring-loaded feed inhibit bracket which controls the feeding of the disks. The loader includes a pivoting flap which serves to separate the floppy disks which are ejected from the disk drive into one of two vertically separated bins. Improved loader construction allows the automatic feeding of floppy disks while minimizing the chances of jamming or damaging the disks.

-1-

AUTOMATIC FLOPPY DISC DRIVE LOADER

Field of the Invention

This invention is generally related to electronic computer devices and more particularly pertains to devices for automatically feeding floppy disks into and out of computer disk drives.

Background of the Invention

Floppy computer disks (or diskettes) are used in the data processing industry for storing computer programs, data, etc. The floppy disks are flat, circular sheets of plastic having magnetic particles which store digital data. The plastic disks are stored inside square envelopes or jackets which prevent the disk from being damaged and provide convenient storage of the disks. The floppy disk consists of the circular plastic disk which is permanently enclosed by the square envelope. The plastic disk has a central hole which is designed to fit over the hub or spindle of a computer disk drive so that the plastic disk may be rotated inside the envelope. A magnetic recording/detecting head is used inside the disk drive in order to read or write digital data from the spinning plastic disk. The floppy computer disk is a particularly convenient and compact device for storing relatively large amounts of digital data. Floppy disks are routinely used for personal computers and smaller computer systems including microcomputers and minicomputers. Because there is a very large market for computer programs that operate with such personal computers or small computer systems, suppliers of computer programs distribute a large number of floppy disks to computer users. It is frequently necessary, in the computer program supply business, to provide revised or updated versions of programs which is often done by distributing new program copies on floppy disks. Because the computer industry is a very volatile and fast-moving market, it is desirable for computer program suppliers to have a large number of computer program copies on floppy disks available for immediate delivery when revisions, updates, or new programs are announced. In order to exert quality control in the use of or production of floppy disks, it is desirable to have ways to rapidly test large numbers of disks during the manufacturing of the disks and during the process of transferring computer data or programs to the disk. It is often necessary to test large numbers of disks or make large numbers of disk copies all at one time. A method often used in the production of floppy disk copies is to sequentially copy the information from a master disk onto a large number of copy disks which then each have the same information as recorded on the master disk.

Loader assemblies have been used in the past in order to sequentially feed floppy disks into a floppy disk drive and in order to sort the floppy disks into two separate bins as they exit from the disk drive. Prior loaders have used a picker mechanism which serves to slide the lowest floppy disk in a stack of floppy disks toward a set of rollers which pull the disk into a disk drive. In such prior loaders, the floppy disks were sorted into two separate horizontally separated bins upon being ejected from the disk drive. The selection between the two horizontally displaced bins in prior loaders was made by a solenoid-operated arm which interfered with the aerodynamic flight of the floppy disk as it left the disk drive so that the horizontal distance travelled by the floppy disk could be selectively controlled. Such a prior loader design is very effective in automatically feeding floppy disks through a floppy disk computer drive, but requires very time-consuming alignment procedures during manufacture and may require very delicate realignment procedures after the loader has been used for some time. Also, such prior loaders have experienced some problems with jamming and damage to floppy disks. Although such problems do not destroy the usefulness of prior loaders, the problems do reduce the loader reliability which may be disadvantageous for high-volume disk handling applications and for loaders used in locations where maintenance service is not readily available.

## Summary

The improved automatic floppy disk loader apparatus of this invention includes an alignment framework, or enclosure, mounted directly to the disk drive which serves to align disk transporting rollers, disk position sensors, and a disk closing solenoid with the disk drive so that a unitary assembly is formed. The alignment enclosure is constructed so that, during manufacture, the drive, rollers, disk closing solenoid and sensors are fixed in predetermined relative spatial positions so that proper alignment is assured. The use of such an alignment enclosure also ensures that misalignment between the disk, rollers and sensors does not occur during use of the loader due to vibration, temperature changes, etc. Three rollers used to propel disks into and out of the disk drive are mounted in a rigid roller alignment frame which serves to hold the three rollers together with predetermined spacing and further allows the rollers to be attached, as a unitary group, to the alignment framework surrounding the computer disk drive. The roller alignment framework is preferably a rigid framework which resists bending or twisting and thus ensures that floppy disks are fed uniformly and smoothly into and out of the computer disk drive.

The improved automatic floppy disk loader apparatus of this invention also includes a pivoting flap which is operated by a solenoid so that floppy diskettes which are ejected from the computer disk drive are automatically sorted between two vertically separated floppy disk bins. The use of such a pivoting flap ensures that the diskettes are reliably sorted into a bin which contains only "accepted" diskettes and a bin which contains only "rejected" diskettes. The two diskette bins for receiving diskettes ejected from the disk drive are preferably formed in a single bin assembly which is removably mounted to the loader so that the bin assembly and the diskettes contained therein may be easily removed from the loader.

The improved automatic floppy disk loader apparatus of this invention also includes an improved picker mechanism for automatically sliding a single diskette from the bottom of the stack of diskettes in the supply hopper of the loader. The improved picker mechanism includes a low friction base plate which has an integral groove for guiding the sliding motion of a picker block. The picker mechanism also includes a hinged, spring-loaded feed inhibit bracket which is designed to prevent diskettes from inadvertently, prematurely sliding into the disk drive. The sliding picker block is shaped to automatically move the feed inhibit bracket downwards, out of the way as the sliding picker block moves forward and pushes a diskette through a pair of rollers and into the disk drive. The hinged feed inhibit bracket reduces the chance of loader malfunction due to metal fatigue and provides a reliable, spring-acting closure. The integral groove in the low friction picker baseplate ensures that the picker block travels smoothly along a straight path.

## Description of the Drawings

Figure 1 is a front perspective view showing the loader apparatus of this invention mounted in a floppy disk processing machine.

Figure 2 is a diagrammatic view of the loader apparatus which shows how the loader functions and which omits much of the loader structure.

Figure 3 is an exploded, perspective view of portions of the floppy disk transport apparatus particularly showing the way the components are assembled into a unitary alignment enclosure, and also showing a pivoting flap used to direct the motion of floppy disks which exit from the disk drive.

Figure 4 is a partially cut away perspective view of the floppy disk transport apparatus showing various components mounted in a unitary alignment enclosure.

Figure 5 is a partially cut away, left side view of the floppy disk transport apparatus in which a transport motor is shown in phantom, two solenoids are shown in phantom, and alternative positions for the pivoting flap and sliding disk motion control bar are shown in phantom. The view shown in Figure 5 is taken along the line 5-5 shown in Figure 1.

Figure 6 is a partially cut away, perspective view taken from above of the picker apparatus portion of the floppy disk loader of this invention.

Figure 7 is a partially cut away, perspective view of a portion of the picker apparatus of Figure 6 shown from beneath.

Figure 8 is a partially cut away, perspective view taken from beneath of the base plate portion of the picker apparatus of this invention.

Figure 9 is a left side view of a portion of the picker apparatus of this invention showing, in phantom, an alternative position for the pivoting flap. The view shown in Figure 9 is taken along the line 9-9 shown in Figure 6.

Figure 10 is an overhead perspective view of a portion of a standard, commercially available floppy disk showing the central hub hole in the disk and the jacket surrounding the disk.

Figure 11 is a perspective view of the floppy disk sensor bracket used in the loader of this invention.

### Description of the Preferred Embodiment

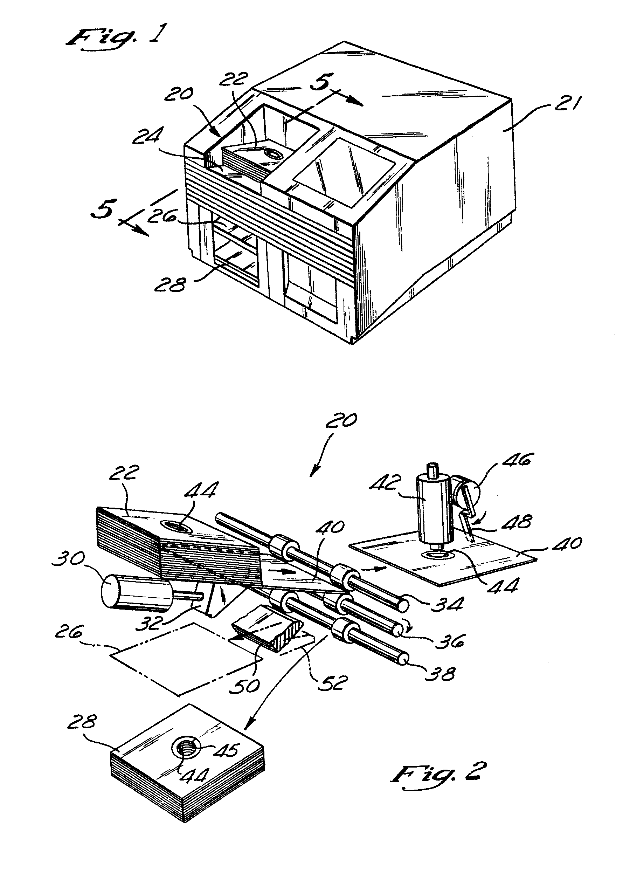

Referring first to Figure 1, a floppy disk loader 20 is incorporated into a computerized floppy disk handling machine 21. The floppy disk handling machine 21 is one example of a device in which the loader 20 may be used. The loader 20 may also be used as part of a floppy disk handling system in which large numbers of loaders similar to the loader 20 may be connected to a central processor so that each of the loaders may be individually controlled by the central processor. The loader 20 may be used as part of a system for the large-scale formatting, initializing, verifying, or copying of floppy computer disks. The loader 20 includes a hopper base plate 24 onto which a stack of floppy computer disks 22 may be placed. The loader 20 includes a pair of floppy disk bins 26 and 28 mounted one above the other, beneath the supply hopper base plate 24. The function of the floppy disk loader 20 is to feed floppy disks from the stack 22, one at a time, into a computer disk drive (not shown) and, after processing of the floppy disks has been completed inside the disk drive, to sort the disks so that each disk is placed either in bin 26 or bin 28. Normally, bin 28 will contain disks which have passed an acceptance test, and bin 26 will contain disks which have not passed an acceptance test. The loader 20 is intended to operate unattended, without operator intervention, so that a large number of disks placed in the stack 22 may be automatically processed. It is important that the loader 20 operates in a smooth fashion so that floppy disks do not become jammed or damaged inside the loader 20 and so that the floppy disks are reliably sorted between the bins 26 and 28.

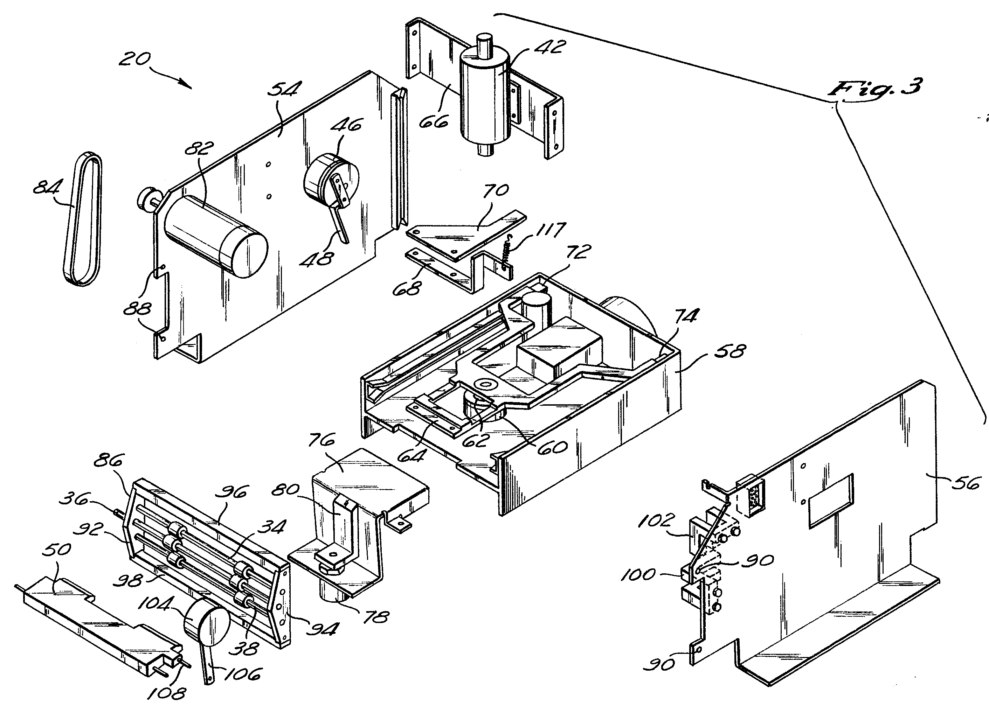

Referring next to Figure 2, floppy disks are moved from the bottom of the stack 22, one at a time, by a picker solenoid 30 which pushes a picker block 32 which, in turn, grips the jacket hole of the lowest floppy disk on the stack 22. The actuation travel of the solenoid 30 is long enough so that the floppy disk at the bottom of the stack 22 is pushed into and through the space between the rollers 34 and 36. The roller 36 is connected to a motor (not shown). The roller 34 acts as an idler so that floppy disks are pulled through the set of rollers 34 and 36. The function of the rollers 34 and 36 is to pull disks from the picker block 32 and move them into a disk drive (not shown).

The diskette 40 is shown in the position it would assume inside the disk drive (not shown) after exiting from between the rollers 34 and 36. A frame solenoid 42 is positioned over the diskette 40 so that the solenoid 42 is substantially aligned with the hub hole 44 of the diskette 40. The function of the frame solenoid 42 is to push the hinged carrier frame (not shown) of the disk drive (not shown) downward so that the diskette 40 is reliably mounted inside the disk drive, and so that the disk drive frame does not become twisted or offset in an undesired manner.

A disk eject lever 48 is connected to a rotary solenoid 46 which is positioned so that actuation of the solenoid 46 will cause the floppy diskette 40 to be pushed out of the disk drive. The rotary solenoid 46 pushes the diskette 40 into and through the space between the rollers 36 and 38. The rotary solenoid 46 is actuated after the linear solenoid 42 has been released so that the disk drive is opened. The purpose of the rotary solenoid 46 and the lever 48 is to move the diskette 40 out of the disk drive after processing of the diskette has been completed. During the ejection of the diskette 40 from the disk drive, the central roller 36 is rotated by a motor (not shown) and the roller 38 acts as an idler so that the diskette 40 is pulled from the disk drive. The pivoting flap 50 is mounted adjacent to the rollers 36 and 38 in order to guide the travel of diskettes passing out from between the rollers 36 and 38. The position shown for flap 50 in Figure 2 will cause a diskette travelling through the rollers 36 and 38 to be placed in the "accept" bin 28. When the pivoting flap 50 is in the position 52 (shown in phantom in Figure 2), diskettes ejected from between the rollers 36 and 38 will travel over the flap 50 and be placed in the "reject" bin 26.

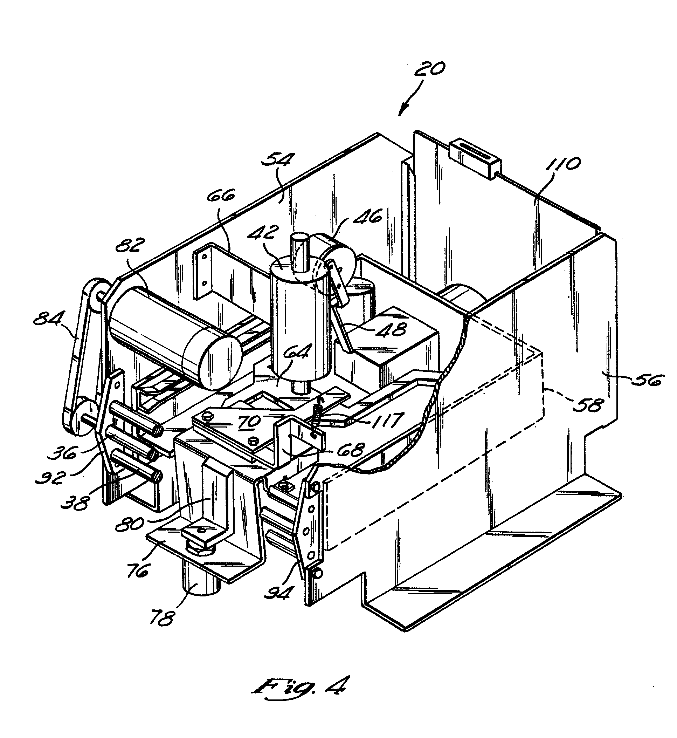

Referring next to Figure 3, alignment side plates 54 and 56 are securely mounted to opposite sides of the disk drive 58 and serve to ensure that components of the floppy diskette loader 20 are held in rigid alignment. The side plates 54 and 56 are preferably folded, metal sheets which are precisely drilled with location holes for the various components of the diskette loader 20 so that during manufacture, the side plates 54 and 56 serve to insure that correct relative spatial positioning will automatically occur for the various components. Since the side plates 54 and 56 are securely attached to the disk drive 58 and are of unitary construction, the side plates 54 and 56 serve to insure that the relative alignment of the components of the diskette loader 20 do not become disturbed due to vibration or temperature changes which may occur during use of the loader 20.

The disk drive 58 has a spindle hub 60 which rotates in order to spin floppy diskettes when in use and has a cone 62 which may be pushed downwards onto the spindle hub 60 in order to force the hub hole of the floppy diskette over the spindle 60. In use, the cone 62 and spindle 60 are clamped together so that the floppy diskette is trapped between the cone 62 and hub 60 and so that rotation of the hub 60 will cause the floppy diskette to rotate. The spindle hub 60 is mounted in the base of the disk drive 58 and the cone 62 is mounted on a hinged frame 64 which is pivotably mounted on the upper side of the disk drive 58. The frame 64 is normally pivoted into an open or up position when floppy diskettes are to be loaded into or removed from the disk drive 58, and the frame 64 is pushed into a closed or down position when a floppy diskette is inside the drive 58. The disk drive 58 shown in Figure 3 is typical of a variety of conventional, commercially available floppy diskette computer drives.

The linear frame solenoid 42 is mounted to a cross bracket 66 which is securely attached to and extends between the alignment side plates 54 and 56. The linear solenoid 42 is mounted above the disk drive frame 64 so that actuation of the solenoid 42 will cause the frame 64 to move down, thus closing the disk drive 58. A spring bracket 68 and contact bracket 70 are securely attached to the frame 64 and provide for spring-assisted opening of the disk drive 58, and a point of contact for closing of the disk drive 58 by the solenoid 42, respectively. The contact plate 70 is positoned on the frame 64 so that the forces exerted by the linear solenoid 42 are substantially close to the cone 62 and spindle 60, so that undesirable twisting or bending of the frame 64 does not occur as the solenoid 42 is used. In a conventional disk drive 58, the frame 64 is supported on the base of the disk drive 58 by a pair of spring hinges 72 and 74 which are usually made of spring steel and provide spring-loaded tension for the frame 64 so that the disk drive 58 will automatically open. Spring hinges 72 and 74 are normally placed close to opposite sides of the disk drive 58 so that twisting or bending of the frame 64 is avoided, and the frame 64 is confined to moving straight up and down. Any external twisting or bending forces (as may be caused by off-center loading of the frame 64) may tend to fatigue or distort the spring hinges 72 and 74 and thus lead to their premature failure. Therefore, the linear frame solenoid 42 and contact plate 70 are centrally mounted with respect to the frame 64 so that off-center loading of the frame 64 and premature failure of the spring hinges 72 and 74 is avoided.

The disk ejection prevention mechanism 76 is mounted to the forward end of the disk drive 58 and includes a solenoid 78 and ejection prevention bar 80 which may be operated to prevent floppy diskettes from being inadvertently, prematurely ejected from the disk drive 58.

A direct current motor 82 is securely mounted to the side alignment plate 54 and is connected to rotate the drive roller 36 through a drive belt 84. It is preferable that the motor 82 be a direct current, low-inertia motor so that rotation of the drive roller 36 will stop quickly should a diskette become jammed inside the diskette loader 20. The fact that the motor 82 is of the low-inertia type helps to prevent jammed diskettes from becoming mutilated or folded. The fact that the motor 82 is operated from a direct current power source allows the motor 82 to be operated intermittently, which helps to prevent undesired noise signals from interfering with the delicate reading and writing operations performed inside the disk drive 58.

The drive rollers 34, 36 and 38 are mounted inside a roller alignment frame 86 which ensures that the rollers 34, 36 and 38 are held in correct relative spatial position. The alignment frame 86 is square and true so that when the frame 86 is mounted in the mounting holes 88 and 90 of the alignment side plates 54 and 56, respectively, the rollers 34, 36 and 38 will be automatically, correctly aligned with the disk drive 58. The roller alignment plate 86 consists of side plates 92 and 94, and cross bars 96 and 98 which extend between the side plates 92 and 94. The side plates 92 and 94 include bearing holes for the drive rollers 34, 36 and 38 so that the relative positions of the drive rollers is predefined and so that the drive rollers 34, 36 and 38 are held in alignment with each other. The side plates 92 and 94 are rigidly connected to the cross bars 96 and 98 in the alignment frame 86 so that the alignment frame 86 is held rigidly together and avoids twisting or warping. Because of the unitary structure of the alignment frame 86, it ensures that the rollers 34, 36 and 38 are correctly, automatically aligned during manufacture and further ensures that relative alignment of the rollers does not change during use due to vibration or temperature changes. The mounting of the alignment frame 86 on the alignment side plates 54 and 56 ensures that the relative alignment of the rollers 34, 36 and 38 with the disk drive 58 automatically, correctly occurs during manufacture and that the alignment is maintained during use and does not change due to vibrations or temperature changes.

A disk position sensor bracket 100 is mounted on the side plate 56 in order to detect the position of floppy diskettes as they move into or are ejected from the disk drive 58. The bracket 100 is equipped with a pair of infrared photoelectric transducers, each of which consists of an infrared light transmitter and an infrared light detector. Detection of the position of a floppy diskette occurs by detection of when the beam of infrared light between transmitter and detector is interrupted by the presence of a floppy diskette. It is preferable that the disk position sensor bracket 100 make use of infrared light so that ambient room lighting does not interfere with the reliable detection of diskette position. The bracket 100 is securely mounted to the alignment side plate 56 so that relative alignment between the bracket 100 and the disk drive 58 is predefined by the location of mounting holes in the plate 56 so that correct alignment is automatically achieved during manufacture, and correct alignment is reliably maintained during use of the diskette loader 20.

A frame position sensor bracket 102 is mounted on the side plate 56 in order to sense the position of the frame 64 by detecting the location of the bracket 68. The frame position sensor bracket 102 is substantially identical in construction to the diskette position sensor bracket 100. The frame position sensor bracket 102 is mounted in predefined mounting holes on the side plate 56 so that correct alignment is automatically achieved during manufacture and so that correct alignment of the bracket 102 is maintained during use of the diskette loader 20 even though vibrations or changes in temperature may occur.

The pivoting plate 50 is mounted in front of the roller alignment frame 86 and is actuated by a rotary solenoid 104 acting through a crank bar 106. The crank bar 106 is rotatably mounted on a pin 108 attached to the pivoting flap 50.

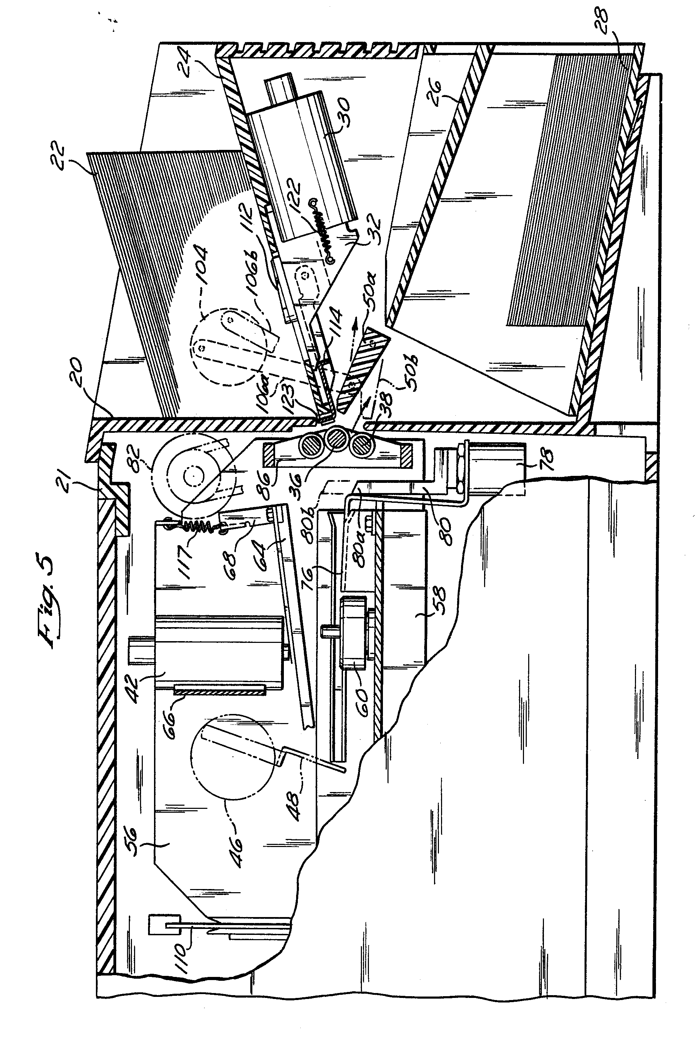

Referring next to Figure 4, a portion of the floppy disk loader 20 is shown assembled and corresponds to the parts shown in Figure 3 which are shown unassembled, in an exploded drawing. The disk drive 58 spans the horizontal distance between the alignment side plates 54 and 56. The plates 54 and 56 are to be secured to a chassis (not shown) in order to support the disk drive 58. The side plates 54 and 56 and the disk drive 58 form a unitary assembly which serves to enclose, support and align the components which are used for moving floppy diskettes into and out of the disk drive 58. During manufacture, the disk drive 58 and side plates 54 and 56 form a subassembly which holds a roller alignment frame 86, frame solenoid 42, diskette ejector solenoid 46, and sensor brackets 100 and 102 in pre-defined relative spatial alignment. The disk drive 58 is rigidly mounted to each of the alignment side plates 54 and 56 so that the disk drive 58 is not allowed to shift or move about during use, and thus the alignment is maintained. The roller alignment frame 86 is similarly securely attached to the side alignment plates 54 and 56 so that changes in alignment are prevented. Similarly, the cross-bracket 66 is used to securely mount the linear solenoid 42 between the alignment side plates 54 and 56 so that the linear solenoid 42 may be used to force the carrier frame 64 downwards by pressing on the contact bracket 70. The side plates 54 and 56 serve to ensure that the linear solenoid 42 is kept in position directly over the contact bracket 70 and ensures that the force provided by the solenoid 42 is applied straight down and does not cause twisting of the frame 64.

The alignment side plates 54 and 56 also serve as mounting supports for a printed circuit board 110 which is positioned to slide vertically into card guides on the plates 54 and 56. The printed circuit board 110 is positioned to the rear of the disk drive 58 and is held by the plates 54 and 56 in a convenient position for servicing access. The printed circuit board 110 provides electrical interfacing for the disk drive 58.

Referring next to Figure 5, a picker wedge 112 fits into the circular hole in the jacket of the lowest floppy diskette on the stack 22. The wedge 112 fits into and grips the lowest floppy diskette so that as the picker block 32 slides forwards and downwards towards the disk drive 58, the lowest floppy diskette moves through the roller frame 86 and into the disk drive 58. The feed inhibit bracket 114 serves to prevent floppy diskettes from inadvertently, prematurely leaving the stack 22 and falling into the roller frame 86. The feed inhibit bracket 114 is automatically moved downwards as the picker block 32 slides forward and downwards, so that the floppy diskette gripped by the wedge 112 may enter the roller frame 86.

The motor 82 is actuated in order to pull the diskette through the roller frame 86, towards the disk drive 58, and off of the wedge 112. Once the diskette has entered the disk drive 58, the ejection prevention bar 80 is moved from its rest position at 80a to the position shown at 80b which serves to prevent the floppy diskette from being inadvertently, prematurely ejected from the disk drive 58 towards the roller frame 86. The frame 64 is closed after the diskette has entered the disk drive 58 so that the diskette may be rotated and digital data may be read from and written onto the diskette. Closing of the frame 64 is accomplished by actuation of the linear frame solenoid 42.

After processing of the floppy diskette has been completed inside the disk drive 58, the frame 64 is opened by

-14-

deactuation of the solenoid 42 which allows a retraction spring 117 (attached to the frame 64) and the spring hinges 72 and 74 (see Figure 3) to pull the frame 64 upwards. The ejection prevention bar 80 is lowered to the position 80a by deactuation of the solenoid 78 so that the floppy diskette may be ejected from inside the disk drive 58.

When the floppy diskette inside the disk drive 58 is to be ejected, the rotary solenoid 46 is actuated so that the eject lever 48 pushes the floppy diskette into and through the space between the lower two rollers in the roller frame 86. Rotation of the motor 82 causes the floppy diskette to be pulled through the roller frame 86 towards the pivoting flap 50.

The position of the pivoting flap 50 is set by the rotary solenoid 104 which acts through the connecting bar linkage 106. When the rotary solenoid 104 places the connecting bar 106 in the position labeled 106a, the pivoting flap 50 assumed the position labeled 50a and floppy diskettes ejected through the roller frame 86 will pass under the pivoting flap 50 and be placed on top of a stack in the "accept" bin 28. When the rotary solenoid 104 places the connecting bar linkage 106 in the position labeled 106b, the pivoting flap 50 assumes the position labeled 50b and floppy diskettes ejected through the roller frame 86 will pass over the top of the pivoting flap 50 and be placed on top of the stack in the "reject" bin 26.

Operation of the motor 82, bin control selection solenoid 104, picker solenoid 30, ejection prevention solenoid 78, frame solenoid 42, ejection solenoid 46, and disk drive 56 is preferably placed under the control of a computer processor of conventional construction so that the sequencing of operations provides for smooth movements of floppy diskettes into and out of the disk drive 58.

The bins 26 and 28 are preferably a part of a unitary bin assembly which may be removed from the floppy disk processing machine 21 so that the floppy disks placed in the bins 26 and 28 may be easily removed.

The picker base plate 24 is mounted to allow slight manual adjustment of the discharge slot gap 123 through which the floppy diskettes in the stack 22 must travel through. The gap 123 is defined by the space between the hopper wall and the base plate 24. It is important that the gap 123 be a precisely defined width so that one and only one floppy diskette may pass through the gap 123 at a single time. The preferred mounting arrangement for the base plate 24 on the machine 21 is to have mounting bolts connecting to the sides of the base plate 24 in which the holes for the bolts at the lower end of the base plate 24 are slightly oversized, thus allowing the base plate 24 to be slightly pivoted, in order to allow adjustment of the width of the gap 123.

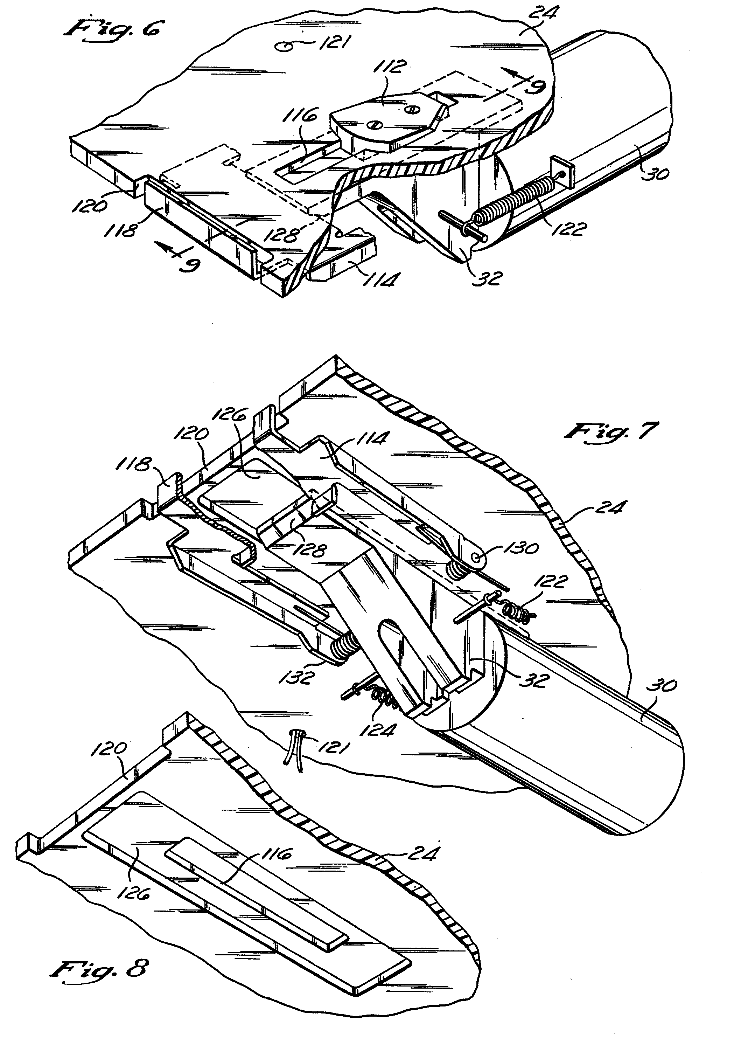

Referring next to Figure 6, the picker wedge 112 is a tapering, metal block having a generally "T" shaped cross section which fits into and slides along a slot 116 which extends through the picker base plate 24. The wedge 112 is shaped to grip a circular hole in a diskette jacket for pushing the diskette forward, and is tapered to allow the diskette to continue moving in a forward direction over the wedge 112 as the rollers 34 and 36 (see Figure 2) pull the diskette into the disk drive 58. The wedge 112 is bolted to the picker block 32 which is on the underside of the picker base plate 24. Because of the "T" shaped cross section of the wedge 112, the wedge 112 and picker block 32 are constrained to slide back and forth on the picker base plate 24, along the slot 116.

The feed inhibit bracket 114 has a lip 118 which extends upwards through a cutout 120 in the picker base plate 24. The feed inhibit bracket 114 is normally in an "up" position so that the lip 118 projects through the cutout 120 and prevents diskettes from sliding off the base plate 24 and into the disk drive 58. As the picker block 32 slides forward and downwards (due to actuation of the solenoid 30), the feed inhibit bracket 114 is automatically moved to a "down" position which lowers the lip 118 in the cutout 120 below the surface level of the base plate 24, so that a diskette may be pushed by the wedge 112 towards the disk drive 58.

An optical sensor 121 is provided on the surface of the base plate 24 so that the presence of floppy diskettes on the base plate 24 may be determined. The sensor 121 detects when light is obstructed by diskettes overlying the sensor 121 on the base plate 24.

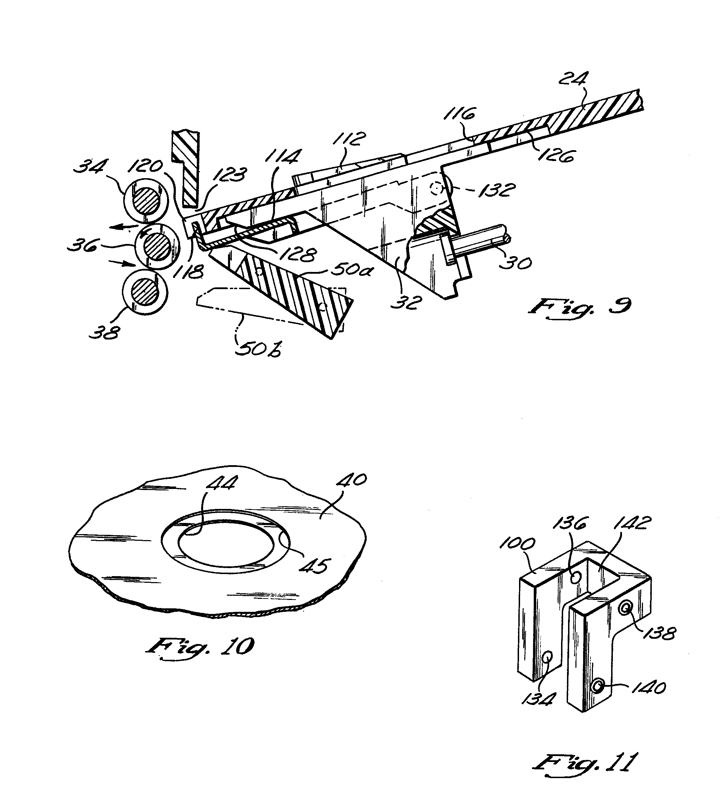

Referring next to Figure 7, the picker block 32 is equipped with a pair of retraction springs 122 and 124 which serve to automatically pull the picker block 32 backwards and upwards when the solenoid 30 is deactuated. The retraction springs 122 and 124 are mounted symmetrically to the picker block 32 so that it is retracted smoothly without twisting or binding. The picker block 32 slides in a flat bottomed recess groove 126 in the lower surface of the base plate 24. The groove 126 serves to constrain the block 32 to a sliding motion along a straight line.

The picker block 32 is equipped with a tapered front nose 128 at its forward end which is shaped to fit under the feed inhibit bracket 114. As the picker block 32 slides forward in the groove 126, the nose 128 pushes the bracket 114 downwards so that the lip 118 is pulled beneath the surface of the base plate 24 and a floppy diskette is allowed to slide from the bottom of the stack 22 into the disk drive 58.

The feed inhibit bracket 114 is mounted to the underside of the base plate 24 by spring loaded hinge joints 130 and 132 which allow the bracket 114 to pivot upwards and downwards and which spring bias the bracket 114 in an "up" position so that when the picker block 32 is retracted, the lip 118 projects from the cutout 120 and inhibits floppy disks from sliding towards the disk drive 58. The spring loaded hinges 130 and 132 allow the bracket 114 to pivot upwards and downwards without causing undue mental fatigue. Because of the mechanical relationship between the picker block 32, nose 128 and feed inhibit bracket 114, the solenoid 30 serves to both slide the picker block 32 forward and pull the feed inhibit bracket 114 downwards when a floppy diskette is to be fed into the disk drive 58.

Referring next to Figure 8, the groove 126 is aligned with the slot 116 so that when the picker block 32 and wedge 112 are bolted together from opposite sides of the base plate 24, the wedge 112 will slide smoothly along a straight line.

Referring next to Figure 9, the feed inhibit bracket 114 is shown in a "down" position so that the lip 118 is beneath the surface of the base plate 24. The feed inhibit bracket 114 assumes this "down" position when the picker block 32 slides forward (as shown) so that the nose 128 is between the base plate 24 and the feed inhibit bracket 114. The picker block 32 has an elongated shape so that the slot 116 is entirely covered by the picker block 32 as the block 32 slides back and forth in the groove 126. The picker solenoid 30 has a flared actuator bar which slides into a slot of the picker block 32 for ease in assembly and to allow some flexibility in the interconnection between the solenoid 30 and the block 32.

The roller 36 rotates in a counter-clockwise direction (as shown in Figure 9), which causes both the idler rollers 34 and 38 to rotate in clockwise directions. A floppy disk which is pushed by the wedge 112 through the space between the rollers 34 and 36 will be pulled off of the wedge 112 and into the disk drive 58 (see Figure 5) by the rollers 34 and 36. Floppy diskettes which are ejected from the disk drive 58 and pushed through the space between the rollers 36 and 38 by the ejector lever 48 will be propelled by the rollers 36 and 38 past the pivoting flap 50. The flap 50 may be moved between the positions shown as 50a or 50b in order to select between the bins 26 and 28 (see Figure 5) into which the floppy diskette may be placed. When the pivoting flap is in the position shown as 50a, a floppy diskette passing through the rollers 36 and 38 will slide under the flap 50 and enter the bin 28. When the pivoting flap 50 is in the position shown as 50b, a floppy diskette passing through the rollers 36 and 38 will pass over the top of the flap 50 and enter the bin 26. Figure 9 shows the picker block 32 in a forward position that it would assume during the time when a floppy diskette is being pushed through the space between the rollers 34 and 36. During the time that a diskette is ejected through the space between the rollers 36 and 38, the picker block 32 would be retracted backwards and upwards to the rear of the groove 126.

Referring next to Figure 10, the floppy diskette 40 consists of a sandwich construction in which a flexible, circular magnetic recording sheet is placed inside a square jacket. A hub hole 44 is provided in the magnetic recording sheet which fits between the cone 62 and the spindle 60 of the disk drive 58 so that the magnetic recording sheet may be rotated inside the disk drive 58 (see Figure 3). A hole 45 in the jacket of the floppy disk 40 is of slightly larger size than the hub hole 44 and provides clearance for the spindle 60 and cone 62 so that the magnetic recording sheet may be rotated without rotating the outer, square jacket. During operation of the loader 20, the wedge 112 fits into and grips the hole 45 in order to transport the floppy disk 40 into the disk drive 58.

Referring next to Figure 11, the sensor bracket 100 is identical in construction to the sensor bracket 102. As described above, the purpose of the sensor bracket 100 is to detect the position of the floppy diskette inside the disk drive 58, and the purpose of the sensor bracket 102 is to detect the position of the carrier frame 64 as it is raised and lowered inside the disk drive 58. The sensor bracket 100 is a generally "L" shaped block having a slot 142 extending along the length thereof. Infrared light emitting diodes (transmitters) 136 and 134 are positioned to project infrared light into the slot 142. Infrared light detectors (receivers) 138 and 140 are positioned to detect infrared light inside the slot 142 and are mounted opposite the light emitting diodes 136 and 134, respectively. The light detector 138 serves to detect the interruption of the light beam projected by the light emitting diode 136. Similarly, the detector 140 detects the interruption of the infrared light beam projected by the light emitting diode 134. Therefore, the detectors 138 and 140 are sensitive to the objects inside the slot 142, so that as a diskette moves through the slot 142, the detectors 138 and 140 respond to the presence of the floppy diskette. The bracket 100 is positioned adjacent the disk drive 58 so that the detector 138 indicates when a floppy diskette is between the disk drive 58 and the drive roller frame 86. The detector 140 is positioned on the leg of the bracket 100 which is bent into the disk drive 58 so that the detector 140 indicates when a floppy disk is inside the disk drive 58.

Similarly, infrared light detectors in the sensor block 102 respond to the position of the carrier bracket 64 by sensing the interruption of light beams. The light detectors of sensor block 100 and 102 are preferably connected to the same computerized controller which serves to control the operation of the roller motor 82, frame solenoid 42, ejection solenoid 46, pivoting flap solenoid 104, and picker solenoid 30. Thus, the actuation of the motor 82 and the solenoids of loader 20 may be coordinated with the position of the diskette and the position of the carrier frame 64.

WHAT IS CLAIMED IS:

1. A transport apparatus for moving a stack of floppy computer disks into and out of a computer disk drive having a spindle for rotating a floppy disk and having a cone mounted on a movable carrier frame for holding the floppy disk on the spindle, said transport apparatus comprising:

a picker apparatus for sequentially feeding floppy disks from said stack into said disk drive;

an alignment enclosure for maintaining alignment of said disk drive and having two side plates for securely mounting to opposing sides of said disk drive so that the front of said disk drive is open to receive floppy disks;

a drive roller assembly securely mounted between said side plates in front of said disk drive so that said drive roller assembly is held in alignment with said disk drive and so that floppy disks may be repeatedly fed through said roller assembly into and out of said disk drive without jamming or becoming jammed;

disk position sensors securely mounted on one of said side plates in alignment with said disk drive, so that said sensors detect the position of floppy disks is in said disk drive; and

an electrical motor securely mounted on one of said alignment plates and coupled to said drive roller assembly in order to move floppy disks into and out of said disk drive.

2. The transport apparatus of Claim 1 wherein said drive roller assembly comprises:

upper, middle, and lower rollers;

a pair of roller end plates having spaced-apart holes therein for rotatably mounting the shafts of said rollers, said plates mounted at opposite ends of said roller shafts so that said rollers are maintained in a parallel spaced-apart relationship;

a pair of stabilizing bars attached to and extending between said end plates, and positioned parallel to said rollers in order to hold said rollers in mutual alignment and prevent twisting of said drive roller assembly.

3. The transport apparatus of Claim 1 wherein said disk position sensors are parts of a disk sensor assembly comprising:

an L-shaped sensor bracket securely mounted to one of said side plates so that said sensor bracket extends from said side plate in front of said disk drive and bends to extend into said disk drive, and so that said sensor bracket is held in alignment with said disk drive;

a first disk position sensor mounted in said bracket outside of said disk drive in order to detect the presence of a floppy disk between said disk drive and said drive roller assembly; and

a second disk position sensor mounted in said bracket inside of said disk drive in order to detect the presence of a floppy disk in said disk drive.

4. The transport apparatus of Claim 3 wherein said sensor bracket has a slot extending therethrough, along the length thereof so that floppy disks may pass through said slot into said disk drive; and said first and second disk position sensors each comprise an optical transmitter and an optical receiver which are mounted on opposite sides of said slot so that the presence of a floppy disk will interrupt the passage of light between the transmitter and receiver.

5. The transport apparatus of Claim 1 wherein said disk position sensors comprise infrared optical detection devices which respond to the presence of floppy disks but which are substantially non-responsive to ambient room lighting.

6.. The transport apparatus of Claim 1 further comprising a rotary disk eject solenoid mounted to one of said alignment plates and having a disk ejecting lever mounted thereon to project inside said disk drive; so that when said disk eject solenoid is actuated, said disk ejecting lever pivots to push a floppy disk out from said disk drive and through said drive roller assembly.

7. The transport apparatus of Claim 1 wherein said carrier frame is mounted on spring hinges and wherein said transport apparatus further comprises a centrally located frame solenoid positioned above said carrier frame adjacent said cone so that operation of said solenoid will cause a floppy disk to be clamped tightly between said cone and said spindle, and so that operation of said solenoid will not place twisting forces on said spring hinges, thus allowing said spring hinges to bend uniformly and avoid metal fatigue.

8. The transport apparatus of Claim 1 wherein said electrical motor is a low-inertia direct current motor connected to actuate said drive roller assembly, so that the motor is not operating to produce undesired electrical noise, and so that the motor will quickly stop in order to avoid damaging a floppy disk which has become jammed.

9. A floppy disk picker apparatus for feeding a stack of floppy computer disks, one by one, into a computer disk drive, said picker apparatus comprising:

a supply hopper assembly for holding a stack of floppy disks, having a sloping bed made of low friction material supporting said disks so that said disks slide easily over said bed, and having a discharge slot through which floppy disks may be moved;

a picker block assembly mounted on said sloping bed with a wedge gripper above the bed connected to a sliding block below the bed through a slot in the bed, and wherein said sliding block fits into and is guided by a recess groove in the underside of the bed so that low friction sliding may occur between the sliding block and the bed, and so that the gripper wedge moves smoothly in a straight line as the sliding block moves in order to push floppy disks out of said supply hopper, through said discharge slot.

10. The floppy disk picker apparatus of Claim 9 further comprising a hinged feed-inhibit bracket mounted on the underside of said sloping bed and having a lip positioned to cover said discharge slot, wherein said feed-inhibit bracket is hinged to avoid fatigue and is spring loaded to position said lip in front of said discharge slot in order to prevent floppy disks from accidentally coming out of said supply hopper, and wherein said sliding block is equipped with a rounded nose in order to automatically move said feed-inhibit bracket and remove said lip from said discharge slot as said gripper wedge moves a floppy disk towards said discharge slot, so that the floppy disk may leave said supply hopper and enter said disk drive.

11. The floppy disk drive picker apparatus of Claim 9 further comprising:

a pair of retraction springs mounted between said sliding block and said sloping bed in order to automatically retract said gripper wedge away from said discharge slot; and

an electrically operated picker solenoid mounted between said retraction springs so that when said picker solenoid is actuated, said gripper wedge and said sliding block move towards said discharge slot in order to move a floppy disk out of said supply hopper.

12. The floppy disk drive picker of Claim 9 wherein said sloping bed is adjustably mounted in said supply hopper assembly in order to allow adjustment of the width of said discharge slot so that floppy disks are allowed to exit from the hopper one at a time.

13. The floppy disk drive picker of Claim 9 wherein said picker discharge slot is to be mounted in front of a motorized drive roller assembly of a floppy disk transport apparatus, and wherein the sliding movement of said gripper wedge causes a floppy disk to exit from said discharge slot and push through said drive roller assembly.

14. A floppy disk sorter apparatus for sorting floppy disks, one by one, as the floppy disk exits from a computer disk drive, said sorter apparatus comprising:

a lower bin for receiving floppy disks from said disk drive;

an upper bin mounted vertically above said lower bin for receiving floppy disks from said disk drive; and

a pivoting flap for mounting between said disk drive and said upper and lower bins, so that when said flap is pivoted downwards, then a floppy disk exiting said disk drive slides over said flap and enters said upper bin; and so that when said flap is pivoted upwards, then a floppy disk exiting said disk drive slides under said flap and enters said lower bin.

15. A floppy disk handling apparatus for transporting floppy diskettes into and out of a computer disk drive, said apparatus comprising:

means for rolling floppy disks into said disk drive;

means for holding said means for rolling and said disk drive in a unitary assembly so that said means for rolling is held in rigid alignment with said disk drive.

16. The apparatus of Claim 15 wherein said means for rolling comprises:

a plurality of rollers for gripping floppy disks and rolling said disks into said disk drive;

a roller alignment frame for supporting said rollers in fixed relative spatial positions so that the rollers rotate smoothly but do not become twisted or misaligned.

17. The apparatus of Claim 15 wherein said means for holding comprise alignment side plates rigidly attached to opposite sides of said disk drive and rigidly mounting said means for rolling in front of said disk drive.

18. The floppy disk handling apparatus of Claim 15 further comprising disk ejector means for ejecting floppy disks from said disk drive by pushing disks into and through said means for rolling, wherein said means for ejecting is rigidly mounted on said means for holding so that alignment between said means for ejecting and said disk drive is maintained.

19. The floppy disk handling apparatus of Claim 18 wherein said means for ejecting comprises:

a rotary ejector solenoid rigidly mounted on said means for holding; and

an ejector lever arm attached to said ejector solenoid and projecting into said disk drive so that actuation of said ejector solenoid will push a diskette into and through said means for rolling.

20. The floppy disk handling apparatus of Claim 15 further comprising means for disk drive closing mounted on said means for holding so that said disk drive is automatically closed by said means for closing through the application of a closing force substantially close to the spindle of said disk drive.

21. The floppy disk handling apparatus of Claim 20 wherein said means for closing comprises a linear frame solenoid positioned above the carrier frame of said disk drive near the spindle of said disk drive such that actuation of said frame solenoid will push said carrier frame downwards onto said spindle.

22. The floppy disk handling apparatus of Claim 20 wherein said means for holding comprise alignment side plates rigidly attached to opposite sides of said disk drive; and said means for closing comprises a linear frame solenoid securely mounted to a transverse bracket extending between said side plates so that alignment between said frame solenoid and said disk drive is maintained.

23. The floppy disk handling apparatus of Claim 20 further comprising means for sensing closure rigidly mounted on said means for holding so that alignment between said means for sensing closure and said disk drive is maintained, and wherein said means for sensing closure detects the position of the carrier frame of said disk drive.

24. The floppy disk handling apparatus of Claim 23 wherein said means for sensing closure comprises a sensor block mounted to said means for holding, and having an "L" shaped body with a slot through the length thereof and with light interruption detectors mounted across said slot in order to detect motion of said carrier frame which interrupts light passing through said slot.

25. The floppy disk handling apparatus of Claim 23 or 24 wherein said means for sensing closure comprise infrared light sources and detectors which are substantially immune to interference from ambient lighting.

26. The floppy disk handling apparatus of Claim 15 further comprising means for sensing floppy disks passing through said disk drive, wherein said means for detecting floppy disks is rigidly mounted on said means for holding so that alignment between said means for sensing floppy disks and said disk drive is maintained.

27. The floppy disk handling apparatus of Claim 26 wherein said means for sensing floppy disks comprises a sensor block mounted to said means for holding, and having a slot through the length thereof and with light interruption detectors mounted across said slot in order to detect motion of floppy disks through said slot which interrupts light passing through said slot.

28. The floppy disk handling apparatus of Claim 25 or 26 wherein said means for sensing floppy disks comprise infrared light sources and detectors which are substantially immune to interference from ambient lighting.

29. A floppy disk picker apparatus for sequentially feeding floppy disks into a computer disk drive, said apparatus comprising:

means for sliding a disk from said stack towards said disk drive; and

means for supporting said means for sliding in a recessed groove so that said means for sliding moves in a straight line path along said groove.

30. The floppy disk picker apparatus of Claim 29 wherein said means for supporting comprises a picker base plate having a recessed groove on the underside thereof; and wherein said means for sliding comprises a wedge projecting through a slot in said base plate and attached to a picker block on the opposite side of said base plate, so that as said picker block slides along said recessed groove, said wedge slides along the topside of said base plate, through said slot.

31. A floppy disk picker apparatus for sequentially feeding floppy disks into a computer disk drive, said apparatus comprising:

means for inhibiting feeding of floppy disks by blocking a disk discharge slot leading to said disk drive, wherein said means for inhibiting is hinged to move between open and closed positions; and

means for sliding a disk from said stack towards said disk drive, wherein said means for sliding automatically opens said means for inhibiting as said disk is moved towards said disk drive.

32. The floppy disk picker apparatus of Claim 31 wherein said means for inhibiting comprises a pivotally mounted feed inhibit bracket which is spring biased in said closed position; and wherein said means for sliding comprises a picker block having a tapered nose which slides under said feed inhibit bracket to open said bracket as a disk is moved towards said disk drive.

33. A floppy disk sorter apparatus for automatically sorting floppy diskettes ejected from a computer disk drive, said sorter comprising:

means for receiving floppy diskettes in a plurality of vertically separated stacks; and

means for deflecting floppy diskettes ejected from said disk drive, so that said diskettes may be selectably deflected into any one of said stacks.

34. The floppy disk sorter apparatus of Claim 33 wherein said means for receiving comprises vertically separated bins; and wherein said means for deflecting comprises a pivotable flap.

*Fig. 1*

*Fig. 2*

Fig.3

Fig. 4

Fig. 5

0094240

**Fig. 6**

**Fig. 7**

**Fig. 8**

Fig. 9

Fig. 10

Fig. 11